# EUROPEAN PATENT APPLICATION

(11) **EP 2 316 761 A1**
(43) Date of publication of application: **04.05.2011**
(21) Application number: 10013985.6
(22) Date of filing: 26.10.2010
(51) Int. Cl.: B65G 47/91

(54) **Device for pickup and transfer of frozen food items**

(30) Priority: 28.10.2009 US 255691 P
(71) Applicant: Johnson Food Equipment, Inc., Kansas City, KS 66115 (US)
(72) Inventor: Downs, Larry, Indianola Mississippi 38751 (US); Nicholas, Shawn, Missouri 64081 (US); Criscione II, Frank J., Kansas City Missouri 64118 (US)
(74) Representative: Manasse, Uwe

(57) **Abstract**

Still another aspect of the invention provides a device for use with a machine adapted to pick up an object, the machine including a vacuum source, where the device includes a shaft having an upper end that includes an opening extending therethrough, and a head (108) having a lower end that includes an opening extending therethrough. The lower end of the head (108) is substantially flat and pliable and is adapted to engage an object being picked up by the device. The opening (106) in the shaft is in fluid communication with the opening (112) in the head (108) to that when the vacuum source is engaged a vacuum is created within the openings.

## Description

### CROSS REFERENCE TO RELATED APPLICATIONS

This Application claims priority of U.S. Provisional Application No. 61/255,691, filed on October 28, 2009 and incorporated herein by reference in its entirety.

### BACKGROUND OF THE INVENTION

1. FIELD OF THE INVENTION

The present invention relates to devices for picking up and/or transferring objects from a bin, conveyor, or other location. The invention is particularly suited to pickup and/or transfer of frozen food items.

2. DESCRIPTION OF THE PRIOR ART

Food processing facilities commonly include conveyors or bins from which food items are transferred. Such items are commonly transferred by machine if the facility has a machine in place for handling such transfers. If no machine is in place, or if the food items are not readily transferable using the existing machine, the transfer is generally performed manually. Manual transfer is a repetitive, time-consuming endeavor.

Frozen food items are particularly difficult to pickup and transfer via machine. The hard, cold surfaces of such food items make the use of machines for these items problematic, as does the slippery nature of such food items when the frozen surface of the food item contacts the machine. Thus, frozen food items are still commonly transferred from bins or conveyors by hand. In addition to the repetitive and tiresome aspects of such manual transfer, using manual transfer methods for frozen food items requires workers to be present in cold environments for extended periods of time.

### SUMMARY OF THE INVENTION

The present invention provides a device for use with a machine operable to pick up an object, such as a frozen food item. The machine includes a vacuum source and the present device includes a body with a first end and second end, and an opening extending through a length of the body. The first end of the body is attached to the machine so that when the vacuum source is engaged a vacuum is created within the opening of the body and the second end conforms at least partially to the surface of the object being picked up in order to more readily allow the vacuum to work to pick up the object.

In one aspect of the invention, the body includes a shaft at the upper end of the body and a head at the lower end of the body, where the head has a greater width than the shaft and where the lower end of the head is substantially flat. The substantially flat portion of the head is adapted to engage an object being picked up by the device and to conform at least partially to the surface of that object.

In another aspect of the invention, the device is of unitary construction.

In still another aspect of the invention, the opening has a first internal diameter at a first end of the opening and a second internal diameter at a second end of the opening. The second internal diameter is greater than the first internal diameter.

In another aspect of the invention, the opening forms a groove in an interior surface of the shaft for receipt of a portion of the machine.

Another aspect of the invention provides that the machine includes an adapter sized and shaped to be received in an opening of the present device.

Still another aspect of the invention provides that the opening forms a groove in an interior surface of the opening for receiving a portion of the adapter.

Still another aspect of the invention provides a device for use with a machine operable to pick up an object, the machine including a vacuum source, where the device includes a shaft having an upper end that includes an opening extending therethrough, and a head having a lower end that includes an opening extending therethrough. The lower end of the head is substantially flat and pliable to engage an object being picked up by the device. The opening in the shaft is in fluid communication with the opening in the head to that when the vacuum source is engaged a vacuum is created within the openings.

### BRIEF DESCRIPTION OF THE DRAWING FIGURES

FIG. 1 is a sectional view of a pick up device utilizing a nozzle according to the present invention.

FIG. 2 is an exploded diagram depicting a nozzle of the present invention, an insert, and a prior art receptacle.

FIG. 3 is a sectional diagram of a nozzle of the present invention attached to an adapter and inserted into a prior art receptacle.

FIG. 4 is an alternate sectional diagram of a nozzle of the present invention attached to an adapter and inserted into a prior art receptacle.

### DETAILED DESCRIPTION

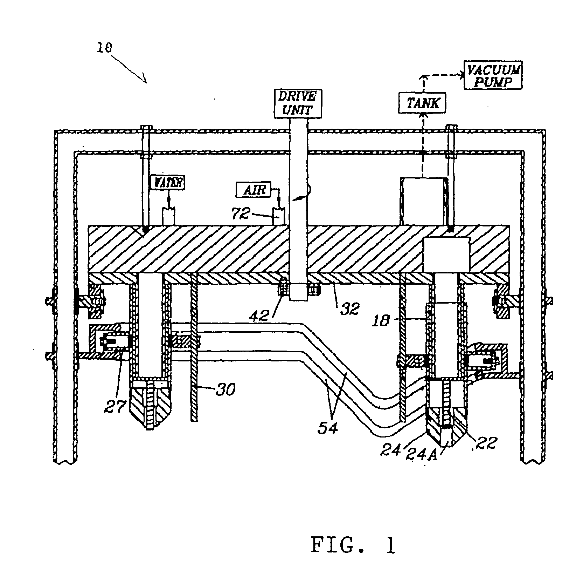

FIG. 1 depicts an exemplary existing machine that is suitable for use with the present invention. The overall operation of the machine 10 is the subject of U.S. Patent No. 5,725,082, incorporated herein by reference in its entirety. Machine 10 is operable to pickup and transfer food items from a conveyor, bin, or other location. In operation, a drive unit turns disc 32 to move pickup devices 18 in a circular path. The vacuum source then operates to remove air from groove 42 and through the pickup devices 18 in contact with groove 42. Vacuum is not supplied to devices 18 that are not in contact with groove 42. Bushings 27 engageable with rail assembly 54 control the up and down movement of pickup devices 18. When the pickup devices 18 move toward a first location they travel downward into the first or pickup location. The pickup devices 18 also extend downward. Receptacle 24 is in close relationship with a food item on a conveyor, in a bin, or in any other suitable location. The receptacle 24 may move into direct engagement with the food item. The vacuum force and air moving into receptacle orifice 24A move the foot item up into holding engagement with receptacle 24. The vacuum force retains the food item against receptacle 24. In the device depicted in FIG. 1, the vacuum force retains food item against receptacle 24 so long as pickup device 18 is aligned with groove 42. The pickup devices 18 move upwardly and away from the first location and transport the food items to a second location. When pickup device 18 is above the second location, the vacuum force is cutoff. Rod 22 moves through orifice 24A, thereby pushing the food item off of receptacle 24. Air pressure can be supplied to nozzle 72 in order to facilitate removal of the food item from receptacle 24.

FIG. 1, described above, is one embodiment of a device with which the present invention is utilized. It is contemplated, however, that the present invention is not limited to use with such a device. The present nozzle may be used for any suitable pickup and/or transfer purpose, and may be used with both food items and non-food items. The nozzle of the present invention is now described with more particularity.

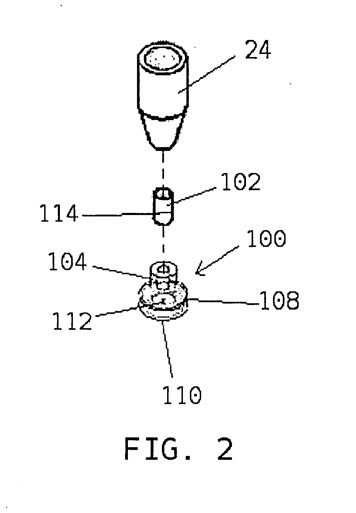

When adapted for use with a device such as that shown in FIG. 1, the present invention, nozzle 100, includes an adapter 102 for securing device 100 to receptacle 24. Adapter 102 may be attached to receptacle 24 in any suitable manner, and may be either fixedly or removably attached thereto. Alternatively, it is contemplated that a receptacle 24 may be sized and shaped to receive nozzle 100 without the need for an adapter 102. Adapter 102 is provided merely to show one possible configuration for attaching the present nozzle 100 to a prior art device 10. FIG. 2 depicts the relationship between nozzle 100, adapter 102, and receptacle 24 of a prior art machine 10, as shown in FIG. 1.

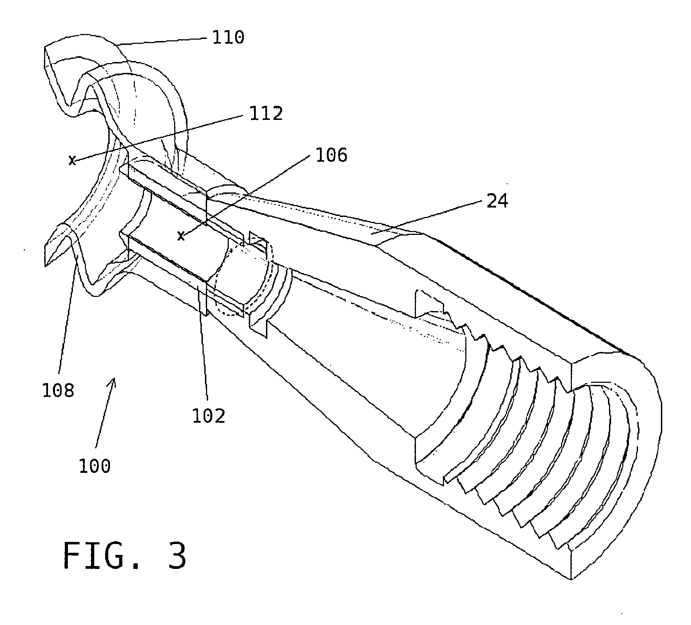

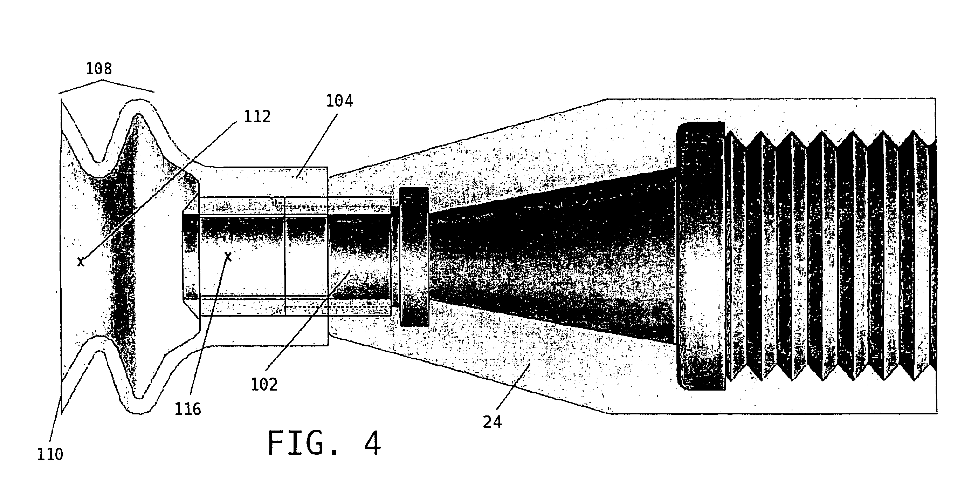

One aspect of the present invention provides a nozzle 100 of unitary construction. As used herein, the word unitary refers to a single-piece item, molded or cast as such, and not a combination of two or more parts affixed to one another to form nozzle 100. Nozzle 100 includes a shaft 104, which is elongate and includes an opening 106 extending through a length thereof. This is most clearly seen in the cross-sectional views shown in FIGS. 3 and 4. Opening 106 is adapted to receive a portion of adapter 102 therein so that nozzle 100 can be secured to receptacle 24 of a device such that that shown in FIG. 1. Adapter 102 may have an annular ring 114 formed around a circumference thereof, annular ring 114 also being received by nozzle 100, the soft material of nozzle 100 conforming to annular ring 114 and thereby holding nozzle 100 securely to adapter 102. It is contemplated that nozzle 100 may also be provided with an annular groove (not shown) for receiving adapter 102 therein.

Nozzle 100 also includes a flattened head 108 sized and shaped to engage a food item or other object desired to be picked up by use of nozzle 100. As shown in FIG. 2, flattened head 108 is generally circular in shape, includes an opening 112, which is an extension and enlargement of opening 106, and an annular surface 110 for directly contacting a food item or other object being picked up using nozzle 100. Although shown as generally circular in shape and having an annular surface, it is contemplated that nozzle 100 can be of any suitable size or shape, and the precise size and shape of nozzle 100 may be determined by the types of food items or other objects meant to be picked up using nozzle 100. It is contemplated that such modifications and variations will be apparent to those of skill in the art upon reading this disclosure.

Device 10, now having nozzle 100 attached to a receptacle 24 thereof, operates in substantially the same manner as described with respect to FIG. 1, above. When the vacuum source is engaged, the vacuum extends not only through receptacle 24 but through adapter 102 and nozzle 100. The vacuum pulls at the food item or other object to be picked up and transferred. Although the object being picked up may be frozen, as in the case of a frozen food item for example, the width of head 108 of nozzle 100 and the surface area of annular surface 110 nevertheless allows nozzle 100 to securely grip the object. At the points where the food item or other object comes into contact with annular surface 110, it is contemplated that annular surface 110 is able to conform, to some extent, to the surface of the object being picked up. This is due to the pliable material used to construct nozzle 100. Once the object is securely gripped, it can be moved to a desired location, whereupon the vacuum source is disengaged and the food item or other object is released. If necessary, mechanical means of assisting the disengagement of the food item or other object from nozzle 100 may be provided (see, for example, the push rod mechanism described with respect to FIG. 1, above).

When used with respect to food items, it is contemplated that nozzle 100 will be constructed from a material acceptable to any given use as well as to the requirements of any applicable regulatory body. The material chosen should be to some degree pliable such that the annular surface 110 of nozzle 100 can conform, to an extent, to a surface of the food item or other object being picked up. Nozzle 100 may, for example, be constructed of silicon, rubber, any suitable synthetic polymer, or any other material that allows a degree of conformation to the surface of the object being picked up. Further, although nozzle 100 is described above as being unitary in its construction, it is contemplated that a nozzle 100 may be constructed from multiple parts, secured to one another to form a whole that retains the conforming qualities of the invention as described herein. The entire nozzle need not be constructed of the same material, and in such cases where more than one material is used, different materials may be chosen based on the different needs of each portion of the nozzle (for example, a rigid material for shaft 104, a pliable material for annular surface 110, and the like). Finally, it is contemplated that the shape of nozzle 100, including the shape of the surface of nozzle 100 that contacts the food item or other object being picked up, may be any suitable shape or configuration, or conformation.

Having thus described the preferred embodiment of the invention, what is claimed is:

## Claims

1. A device for use with a machine operable to pick up objects, the machine including a vacuum source, the device comprising:
a body having a first end and a second end, the first end and the second end being separated by a length thereof; and
an opening extending through the body and along the length thereof between the first and second ends,
wherein the first end is attachable to the machine operable to pick up objects such that when the vacuum source is engaged a vacuum is created within the opening, and wherein the second end is adapted to engage an object and to conform at least partially to an object surface of the object when the vacuum source is engaged.

2. The device according to claim 1 wherein said body comprises:
a shaft, the first end of the body being an upper end of the shaft; and
a head, the lower end of the body being a lower end of the body,
wherein the head has a width greater than the shaft, and further wherein the lower end of the head is substantially flat and adapted to engage an object being picked up by the device and to conform at least partially to a surface of the object when the vacuum source is engaged.

3. The device according to claim 2 wherein the device is of unitary construction.

4. The device according to claim 2 wherein the opening has a first internal diameter at the first end of the device and a second internal diameter at a second end of the device, the second internal diameter being greater than first internal diameter.

5. The device according to claim 2 wherein the opening forms a groove in an interior surface of the shaft for receiving at least a portion of the machine therein.

6. The device according to claim 2 wherein said machine includes an adapter sized and shaped to be received by the opening of the device.

7. The device according to claim 6 wherein the opening forms a groove in an interior surface of the shaft for receiving at least a portion of the adapter therein.

8. A device for use with a machine adapted to pick up an object, the machine including a vacuum source, the device comprising:
a shaft having an upper end and having an opening extending through a length of the shaft; and
a head having a lower end and having an opening extending through a length thereof, the lower end of the head being substantially flat and pliable and adapted to engage an object being picked up by the device;
wherein the shaft and head are formed as a unitary construction and further wherein the opening of the shaft is in fluid communication with said opening of the head, such that when the vacuum source is engaged a vacuum is created within the openings.

9. The device according to claim 8 wherein the substantially flat, lower end of the head is an annular ring.

10. The device of claim 8 wherein the opening extending through the shaft forms a groove in an interior surface of the shaft for receiving at least a portion of adapter therein.

11. The device according to claim 8 wherein said machine includes an adapter sized and shaped to be received by the opening of the device.

12. The device according to claim 11 wherein the opening forms a groove in an interior surface of the shaft for receiving at least a portion of the adapter therein.
